(19) Europäisches Patentamt / European Patent Office / Office européen des brevets

(11) **EP 4 260 269 B1**

(12) **EUROPEAN PATENT SPECIFICATION**

(45) Date of publication and mention
of the grant of the patent:
**07.05.2025 Bulletin 2025/19**

(21) Application number: **21840732.8**

(22) Date of filing: **30.11.2021**

(51) International Patent Classification (IPC):
*G06Q 30/0272* (2023.01)    *G06Q 30/0242* (2023.01)
*H04L 67/02* (2022.01)    *G06Q 30/0273* (2023.01)
*H04L 67/50* (2022.01)    *H04L 67/146* (2022.01)
*H04L 9/40* (2022.01)    *H04L 67/55* (2022.01)
*H04L 67/53* (2022.01)

(52) Cooperative Patent Classification (CPC):
**H04L 63/0414; G06Q 30/0242; G06Q 30/0272;
G06Q 30/0275; H04L 67/02; H04L 67/146;
H04L 67/53; H04L 67/535; H04L 67/55**

(86) International application number:
**PCT/US2021/061197**

(87) International publication number:
**WO 2023/101656 (08.06.2023 Gazette 2023/23)**

(54) **AD FREQUENCY MANAGEMENT IN DISJOINT IDENTITY SPACE**

AD-FREQUENZVERWALTUNG IN EINEM GETRENNTEN IDENTITÄTSRAUM

GESTION DE FRÉQUENCE DE PUBLICITÉ DANS UN ESPACE D'IDENTITÉ DISJOINT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.10.2023 Bulletin 2023/42**

(73) Proprietor: **Google LLC**
**Mountain View, CA 94043 (US)**

(72) Inventors:
• **KAR, Subhakanta**
**Mountain View, CA 94043 (US)**

• **SRINIVASAN, Sriram**
**Mountain View, CA 94043 (US)**
• **JOLLY, Jake**
**Mountain View, CA 94043 (US)**

(74) Representative: **Marks & Clerk GST**
**1 New York Street**
**Manchester M1 4HD (GB)**

(56) References cited:
**US-A1- 2018 060 753    US-A1- 2021 090 126
US-B2- 7 359 952**

**Description**

**FIELD OF THE DISCLOSURE**

This disclosure relates to managing display of media content elements to a user across multiple publishers and, more particularly, to improving the accuracy of media content element display while maintaining user privacy.

**BACKGROUND**

Present techniques for accurately distributing content from publishers to users across multiple publisher platforms generally require users to link accounts between publishers. However, such linking is not always technically feasible or desirable due to privacy concerns. Accordingly, one approach is for each publishing platform to transmit the full set of content to a user, even when another publisher platform is likely to independently transmit some of this content to the same user. As a result, a user sometimes receives unnecessary copies of content, which in turns results in excessive use of network bandwidth and processing power. US 2018/060753 AI discloses estimating reach overlap and unique reach for delivery of content items.
US 7 359 952 B2 discloses a content delivery frequency capping method.

**SUMMARY**

A system generates a model of content presentations from multiple independent (disjoint) publishers to users via client devices. The system uses the generated model to create virtual user identifiers and determine which virtual user identifiers are associated with each of the multiple disjoint publishers. The system categorizes the virtual user identifiers, so that virtual user identifiers associated with more than one of the multiple disjoint publishers form a category of overlapping user identifiers, and virtual user identifiers associated with a single publisher form a category of unique user identifiers. Using the number of overlapping user identifiers and the number of unique user identifiers for each publisher, the system determines a frequency capping value for each publisher. The system then uses the frequency capping to limit transmissions via each publishing platform.
The system may use virtual person identifiers (VPIDs) as the virtual user identifiers and may subsequently determine distinct virtual user identifiers by sampling and/or using cookies associated with a geographic region. The system may also use other information associated with the cookies, such as a demographic of network users, timestamps of events, and information from one or more sensors.
The system may modify a predetermined initial frequency capping value to determine the proper frequency capping value for each publisher using the number of overlap user identifiers, the number of unique user identifiers for a publisher, the number of total user identifiers for the publisher, and the number of impressions shown to overlap users to determine the proper frequency capping values.
An invention is set out in the appended claims. According to a first aspect, there is provided a method for improving accuracy of distributing content from a plurality of publishers to a multiplicity of users while maintaining user privacy, wherein at least some of the multiplicity of users have accessed content from the plurality of publishers using different respective user identifiers. The method includes: generating, by one or more processors, a statistical model of presentations of content from the plurality of publishers to the multiplicity of users; determining, using the statistical model for each of the multiplicity of users, one or more user identifiers corresponding to the user, to define a virtual user identifier, wherein each of the user identifiers is associated with a different one of the plurality of publishers; determining, using the statistical model and the virtual user identifiers, how many of the multiplicity of users are associated with multiple ones of the plurality of publishers, to generate an overlap metric; generating, using an overlap metric, a respective frequency capping value for each of the plurality of publishers; and causing each of the plurality of publishers to limit a number of times a content element is provided to the multiplicity of users in accordance with the respective frequency capping value.
In this aspect, each virtual user identifier is defined using cookies associated with a geographic region. In an embodiment, the method further comprises: compiling a set of cookies, each cookie of the set of cookies associated with a user identifier of the one or more user identifiers; and assigning each cookie of the set of cookies to a virtual user identifier of the virtual user identifiers based on at least the geographic region associated with the respective cookie.
In another variation of this embodiment, compiling the set of cookies includes sampling a subset of cookies based on the cookies associated with the geographic region.
In yet another variation of this embodiment, each virtual user identifier is further constructed based on at least one of: a demographic of network users in the geographic region, timestamps of events in the geographic region, and information from one or more sensors.
In still yet another variation of this embodiment, the respective frequency capping value for each of the plurality of publishers is further generated based on a corresponding multiplier for each publisher and a predetermined initial frequency capping value.

In another variation of this embodiment, the respective frequency capping value for each of the plurality of publishers is further generated based on how many of the multiplicity of users are associated with a single publisher of the plurality of publishers.

In yet another variation of this embodiment, the respective frequency capping value for each of the plurality of publishers is calculated using the equation: $F_{px} = F *$

$$\frac{UniqueUserIDs_{px} + OverlapUserIDs_{px} * \left( \frac{OverlapImpressions_{px}}{\Sigma_i\, OverlapImpressions_{pi}} \right)}{TotalUserIDs_{px}}$$

, and further wherein: $F_{px}$ is the respective frequency capping value for publisher $x$ of the plurality of publishers; $F$ is a predetermined initial frequency capping value; $OverlapUserIDs_{px}$ is the overlap metric, the overlap metric how many of the multiplicity of users are associated with multiple ones of the plurality of publishers including the publisher $x$; $OverlapImpressions_{px}$ is a number of presentations shown to $OverlapUserIDs_{px}$ for the publisher $x$; $TotalUserIDs_{px}$ is a total number of user identifiers associated with the publisher $x$; and $\Sigma_i\, OverlapImpressions_{pi}$ is a sum of $OverlapImpressions$ for each publisher $i$ of the plurality of publishers, including at least publisher $x$.

In still yet another variation of this embodiment, the method further includes receiving a predetermined initial frequency capping value; and modifying the predetermined initial frequency capping value for each publisher of the plurality of publishers based on the respective frequency capping value for the respective publisher of the plurality of publishers.

In another variation, the respective frequency capping value for each publisher of the plurality of publishers is further based on a predetermined time period.

In yet another variation, each of generating the statistical model, determining to define a virtual user identifier, determining how many of the multiplicity of users are associated with multiple ones of the plurality of publishers, generating the respective frequency capping value for each of the plurality of publishers, and causing each of the plurality of publishers to limit the number of times the content element is provided to the multiplicity of users repeats after the predetermined time period elapses.

In still yet another variation, the one or more user identifiers are disconnected across the plurality of publishers.

In another variation of this embodiment, the plurality of publishers consists of two publishers and wherein determining how many of the multiplicity of users are associated with multiple ones of the plurality of publishers is determining how many of the multiplicity of users are associated with both of the plurality of publishers.

In yet another variation, each virtual user identifier of the virtual user identifiers is a virtual person identifier (VPID).

In still yet another variation of this embodiment, each virtual user identifier of the virtual user identifiers is an internet protocol (IP) address.

Another example embodiment of these techniques is a system comprising processing hardware and configured to implement a method according to any of the preceding variations and/or embodiments.

## BRIEF DESCRIPTION OF THE DRAWINGS

Fig. 1 is a block diagram of an example system which implements a method for improving accuracy of distributing content from a plurality of publishers to a multiplicity of users while maintaining user privacy;
Fig. 2 is a flow diagram of an example method for determining one or more user identifiers to define a virtual user identifier and subsequently generate a frequency capping value for each publisher using the number of overlap virtual user identifiers between publishers, implemented in the system of Fig. 1;
Fig. 3 is a diagram of an example pair of publisher platforms, each publisher platform having a number of unique identifiers and overlap identifiers associated, implemented in the system of Fig. 1;
Fig. 4 is a block diagram of an example system and method for sorting identifiers into virtual user identifiers based on characteristics of the identifiers, and subsequently determining a number of overlap user identifiers, implemented in the system of Fig. 1; and
Fig. 5 is a messaging diagram of an example scenario in which a client device requests access to resources at a first and second publisher, and a data processing server instructs the first publisher and second publisher to display a determined number of impressions.

## DETAILED DESCRIPTION

A data processing server, a client device, and/or publisher devices implement the techniques of this disclosure to calculate and implement a frequency capping value to limit the number of content media elements transferred to the client device. The data processing server uses a number of virtual identifiers to determine an approximate number of unique and overlapping users between the publishers and, subsequently, to calculate and implement the frequency capping value.

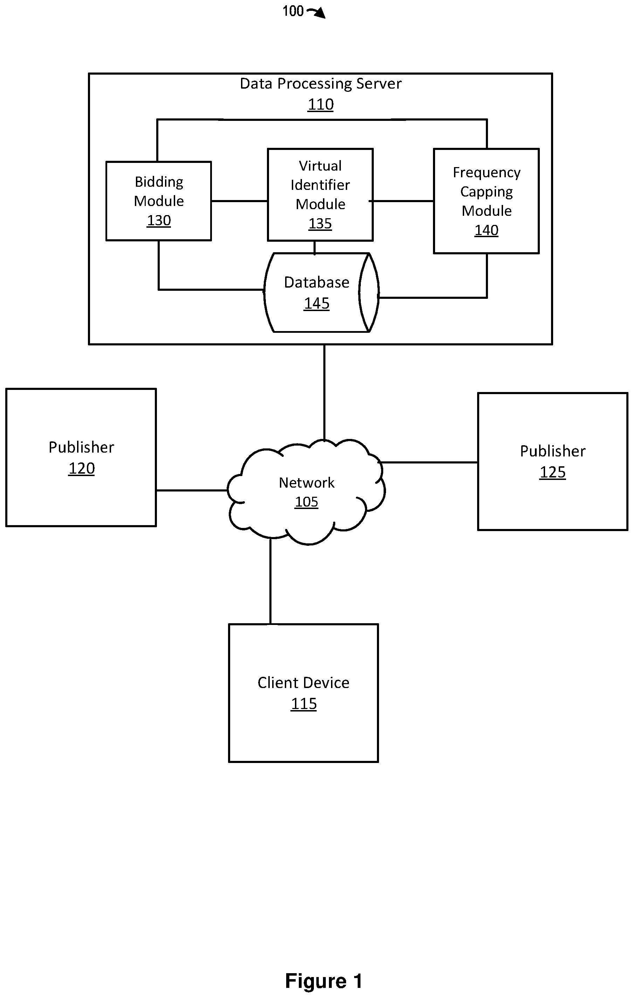

Referring first to Fig. 1, an example content management system 100 for distributing media content elements among multiple computing devices includes a data processing server 110, a client device 115, a first publisher 120, and a second publisher 125, all communicatively coupled via a network 105. In some implementations, the data processing server 110 may include a database 145 and a number of logic modules, such as a bidding module 130, a virtual identifier module 135, and a frequency capping module 140.

The data processing server 110 includes at least one processor and a memory. The memory stores computer-executable instructions that, when executed by the processor, cause the processor to perform one or more of the operations described herein. Depending on the implementation, the processor(s) may include any of a microprocessor, application-specific integrated circuit (ASIC), field-programmable gate array (FPGA), etc., or combinations thereof. Similarly, the memory can include any of electronic, optical, magnetic, or any other storage or transmission device capable of providing the processor with program instructions. The memory can further include any or all of a floppy disk, CD-ROM, DVD, magnetic disk, memory chip, ASIC, FPGA, read-only memory (ROM), random-access memory (RAM), electrically-erasable ROM (EEPROM), erasable-programmable ROM (EPROM), flash memory, optical media, or any other suitable memory from which the processor can read instructions. The instructions can include code from any suitable computer-programming language. Though not illustrated in Fig. 1, the data processing server 110 can include and/or is communicatively coupled to one or more computing devices or servers that can perform various functions.

The instructions stored in the memory of data processing server 110 may be instructions for implementing the various functionalities described herein for respective systems, as well as any data relating thereto, generated thereby, or received via the communications interface(s) or input device(s) (if present). In some implementations, the data processing server 110 includes the memory to store data structures and/or information related to, for example, software components of the data processing server 110 and/or algorithms used in calculating a respective frequency capping value for publishers, as described in more detail below. In some such implementations, the memory includes or is part of the database 145. The processor(s) may execute instructions stored in the memory and, in so doing, may also read from and/or write to the memory various information processed and/or generated pursuant to execution of the instructions.

The processor(s) of the data processing server 110 also may be communicatively coupled to and/or control a communications interface of the data processing server 110 to transmit and/or receive various information pursuant to execution of instructions via the network 105. For example, the communications interface(s) may be coupled to a wired or wireless network, bus, and/or other communication means, and may therefore allow the data processing server 110 to transmit information to and/or receive information from other devices (e.g., other computer systems). Moreover, one or more communication interfaces facilitate information flow between the components of the data processing server 110. In some implementations, the communications interface(s) may be configured (e.g., via various hardware and/or software components) to provide a website to at least some aspects of the data processing server 110 as an access portal.

Further, the data processing server 110 may include output devices that, for example, allow a user to view and/or otherwise perceive various information in connection with the execution of the instructions. Similarly, the data processing server 110 may include input devices that, for example, allow a user to make manual adjustments, make selections, enter data, and/or interact in any of a variety of manners with the processor during execution of the instructions. Additional information relating to a general computer system architecture that may be employed for various systems discussed herein is provided further herein.

The network 105 can be and/or include computer networks such as the Internet, a local area network (LAN), a wide area network (WAN), a metropolitan area network, one or more intranets, a satellite network, a cellular network, an optical network, other types of data network, or a combination thereof. The data processing server 110 is capable of communicating via the network 105 with the first and second publisher computing devices 120 and 125, and/or the one or more client devices 115. The network 105 can include any number of network devices, such as gateways, switches, routers, modems, repeaters, and wireless access points, among others. The network 105 can also include computing devices such as computer servers. The network 105 can also include any number of hardwired and/or wireless connections.

The first and second publisher computing devices 120 and 125 can include servers or other computing devices operated by a content publishing entity to provide primary content for display via the network 105. The primary content can include websites, webpages, client applications, gaming content, or social media content among others for display on the client devices 115. The primary content can include search results provided by search engines. Pages, video segments, or other units of the primary content can include executable instructions, such as instructions associated with content (or ad) slots that cause the client device 115 to request third-party content from the data processing server 110 or other remote systems when the primary content is displayed on the client device.

The client device 115 can include a computing device configured to acquire and display primary content provided by the first and second publisher computing devices 120 and 125 as well as content (e.g., third-party content items such as texts, software programs, images, and/or videos) provided by the data processing server 110. The client device 115 can request and receive such content via the network 105. The client device 115 can include a desktop computer, laptop computer, tablet device, smartphone, personal digital assistant, mobile device, consumer computing device, server, digital video recorder, set-top box, smart television, video game console, or any other computing device capable of communicating via the network 105 and consuming media content. While Fig. 1 shows a single client device 115, the system 100 can include a plurality of client devices 115 served by the data processing server 110.

The data processing server 110 can include a third-party content placement system, e.g., an ad server or ad placement system. The data processing server 110 includes a number of logic modules. In some such implementations, the data processing server 110 includes a bidding module 130, a virtual identifier module 135, a frequency capping module 140, and a database 145. Depending on the implementation, each of the bidding module 130, virtual identifier module 135, and frequency capping module 140 can be implemented as a software module, hardware module, or a combination of both. For example, each of these modules can include a processing unit, server, virtual server, circuit, engine, agent, appliance, or other logic device such as programmable logic arrays configured to communicate with the database 145 and/or with other computing devices via the network 105. The computer-executable instructions of the data processing server 110 can include instructions, which, when executed by one or more processors, cause the data processing server 110 to perform operations discussed below with regard to the bidding module 130, virtual identifier module 135, and frequency capping module 140, or a combination thereof.

The database 145 can maintain a data structure such as a table of virtual user identifiers, corresponding user identifiers and/or characteristics, and cookies associated with the virtual user identifiers. The database can further maintain one or more data structures regarding publisher identifiers and/or information, such as a tree, a linked list, a table, a string, or a combination thereof. The database can further use the one or more data structures to keep track of the assets used in distributing content to client devices 115.

The bidding module 130 can facilitate a content bidding process, such as real-time bidding (RTB). In some implementation, a user visits a website and/or a platform controlled by a content publisher. The visit triggers a bid request that may include one or more cookies that the user has given permission for the content publisher to use. The content publisher transmits the information to the bidding module 130 of the data processing server 110, which facilitates the bidding process with one or more content providers. The content providers may then submit bids to the bidding module 130, which then determines the highest bidder.

In some implementations, the bidding module 130 may additionally or alternatively receive a frequency or predetermined initial frequency capping value with which to serve the media content elements to the user as part of a content campaign. For example, the highest bidder may bid to display 10 copies of a particular media content element in a campaign to a user. The data processing server 110 may determine how to distribute the elements between multiple publishers using the techniques as described herein via the virtual identifier module 135 and frequency capping module 140 before finalizing and/or distributing the campaign.

The virtual identifier module 135 retrieves user identifier information from the network 105, the bidding module 130, and/or the database 145 and defines and/or causes the data processing system 110 to define virtual user identifiers using the retrieved user identifier information. For example, the virtual identifier module 135 may retrieve geographical location cookies from the network 105 and, based on differences in the cookies, assign the cookies to a number of constructed virtual user identifiers. Using the characteristics of the cookies, the virtual identifier module 135 may then determine which virtual user identifiers are associated with both the first publisher 120 and the second publisher 125, and/or any other publishers not shown. The virtual identifier module 135 may then classify such virtual user identifiers as overlap identifiers and may classify virtual user identifiers associated with only a single publisher as unique identifiers.

The frequency capping module 140 retrieves data from the virtual identifier module 135 including the classified list of virtual user identifiers. Using the number of overlap and unique identifiers for a given publisher, the frequency capping module 140 calculates an adjusted frequency capping value for the given publisher. In some implementations, the frequency capping module 140 retrieves further information from the bidding module 130, database 145, and/or network 105 to perform the calculations. For example, in some implementations, the frequency capping module retrieves a predetermined initial frequency capping value from the bidding module 130 as well as an algorithm or statistical model from the database 145.

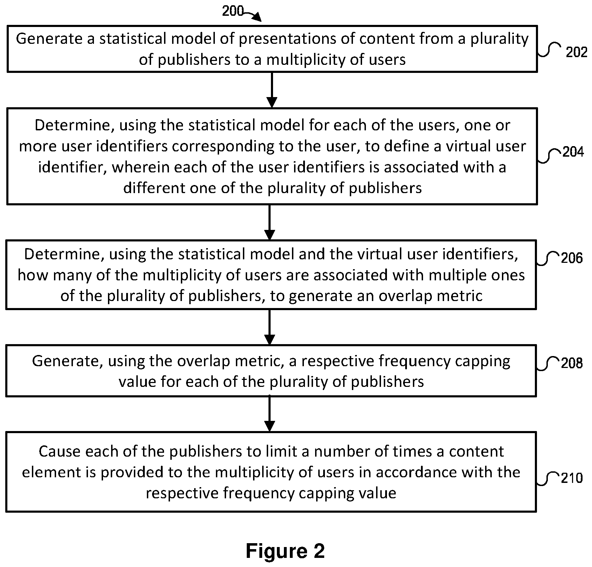

Referring next to Figs. 2-3, a method 200 can be implemented for a number of publisher platforms, such as an example pair of publisher platforms 300. The pair of publisher platforms include accounts unique to the first publisher platform, accounts unique to the second publisher platform, and overlapping accounts for both platforms. Depending on the implementation, the publisher platforms 300 may be implemented in the system and devices of Fig. 1.

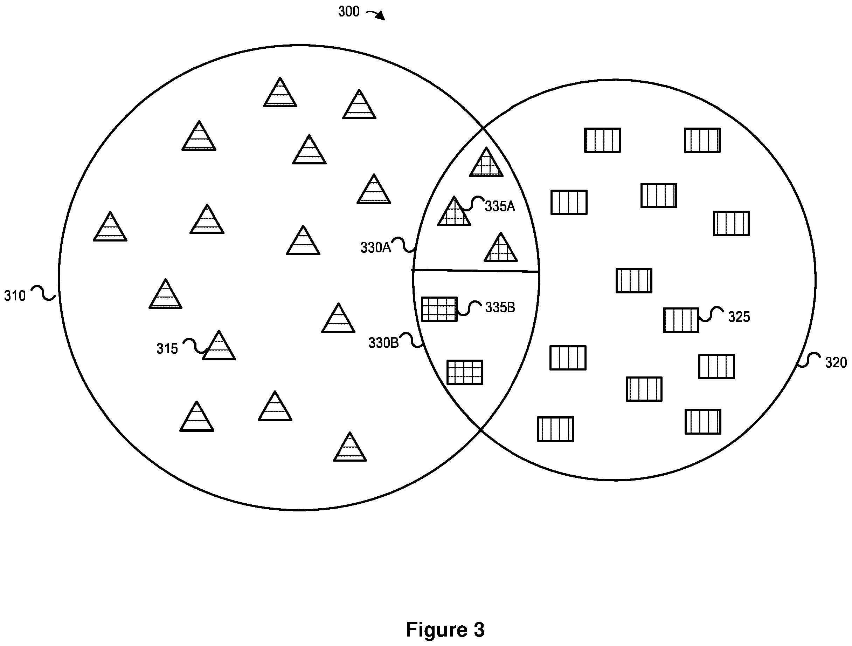

In method 200, at block 202, the system 100 generates a statistical model of presentations of content from a plurality of publishers to a multiplicity of users. Depending on the implementation, the publisher platforms 300 may include any number of publishers. For the sake of clarity of illustration, Fig. 3 illustrates an exemplary pair of two disjoint publisher platforms from separate publishers, publisher platform 310 and publisher platform 320. However, the methods described herein can be expanded such that a system 100 working with any number of publishing platforms may implement the techniques described herein.

In some implementations, the system 100 uses a non-deterministic model as a method of improving privacy for users. Because the model is non-deterministic, the system 100 does not directly link a user or real-world identity to the identifiers through the impressions or events taken as an input to the model. Instead, the model may link presentations of content, also known as impressions, to identifiers that are more broadly applicable to groups for the sake of preserving privacy. For example, the system 100 may instead associate the impressions and events with an internet protocol (IP) address or an internet service provider (ISP) identifier. For further enhanced privacy, the system 100 may associate the impressions and events with a virtual person identifier (VPID) as described in more detail below.

At block 204, the system 100 determines, using the statistical model for each of the multiplicity of users, one or more user identifiers corresponding to the user, to define a virtual user identifier, wherein each of the user identifiers is associated with a different one of the plurality of publishers. Each of publisher platforms 310 and 320 has a number of virtual user identifiers associated with the publisher platforms 310 and 320. Some virtual user identifiers are unique to each publisher platform 310 and 320, such as unique virtual user identifiers 315 and 325, unique to publisher platform 310 and 320, respectively. In addition to unique virtual identifiers 315 and 325, publisher platforms 310 and 320 have overlap in virtual user identifiers. Overlap 330A and 330B collectively represent the overlap in accounts for both platforms 310 and 320. Similarly, overlap virtual user identifiers 335A and 335B collectively comprise the overlap identifiers between the publisher platforms 310 and 320.

In some implementations, the virtual user identifiers 315, 325, 335A, and 335B are user accounts or are associated with user accounts on publisher platforms 310 and 320. In other implementations, the virtual user identifiers 315, 325, 335A, and 335B are identifiers associated with cookies for a geographic location. In some such implementations, the accounts 315, 325, 335A, and 335B correspond with VPIDs or IP addresses rather than direct user accounts. As such, the instant techniques provide a measure of anonymity and privacy over the use of direct user accounts. Moreover, in implementations in which the virtual user identifiers 315, 325, 335A, and 335B are VPIDs or IP addresses rather than accounts, the instant techniques provide a wider range of applicability and generality over techniques that require direct user accounts.

In implementations in which the system 100 associates the impressions and events with a VPID, the model may be a model that receives event-level data about impressions and outputs a VPID and/or information about a VPID. For example, in some such implementations, the model receives records of single ads being displayed on a website once, i.e., event-level impressions, and determine that some of the ads were displayed to different VPIDs. As such, the system 100 determines that ads were displayed to different "people," further causing the system 100 to determine to define virtual user identifiers for the different "people." In such implementations, the VPIDs do not necessarily represent real people, and instead may represent different constructive people-i.e., the VPIDs instead represent fake "people" that are approximations of the number and/or characteristic of actual people. As such, the system 100 may define VPIDs without relying on direct knowledge or characteristics of users. This use of VPIDs allows for better accuracy in determining a frequency capping value while preserving the privacy of users making use of publisher platforms 310 and 320.

In some implementations, the VPIDs are constructed by labelling cookies according to geographic location where the impression occurred. For example, if three impressions occurred in geo region 1 and four impressions occurred in geo region 2, the system 100 may determine that there are two VPIDs being serviced. Moreover, each VPID may be further constructed based on any or all of a demographic of network users in the geographic region, timestamps of events in the geographic region, common network traffic in the geographic region, and/or information from one or more sensors, such as a smart device.

Furthermore, to improve processing power and reduce network traffic, the system 100 can sample cookies rather than assign all cookies to a VPID. As the average internet or network user can use hundreds or thousands of cookies for even brief sessions of activity, large quantities of cookies are redundant for the purpose of differentiating between VPIDs. As such, in some implementations, the system 100 samples some number of cookies and complies a subset of relevant VPID cookies rather than assigning all cookies to VPIDs. The system 100 then constructs each VPID by segmenting the subset of VPID cookies, and each VPID corresponds to a different segment of the subset of cookies. For example, the system 100 may sample 1 in every 1000 cookies, 1 in every 100 cookies, 1 in every 10000 cookies or any other suitable sampling rate. Depending on the implementation, the system 100 may use a predetermined sampling rate and/or the system 100 may modify the sampling rate according to an input.

At block 206, the system 100, using the statistical model and the virtual user identifiers, how many of the multiplicity of users are associated with multiple ones of the plurality of publishers, to generate an overlap metric. In some implementations, the system 100 determines how many of the users are associated with multiple publishers by identifying user identifiers with similar characteristics or traits. For example, determining that a set of cookies originate from a similar geographic location from similar sites or regarding similar content from publishers may be sufficient for a system 100 to determine that the set of cookies is associated with the same virtual user identifier. As such, the overlap metric denotes that the virtual user identifier in question is an overlap identifier.

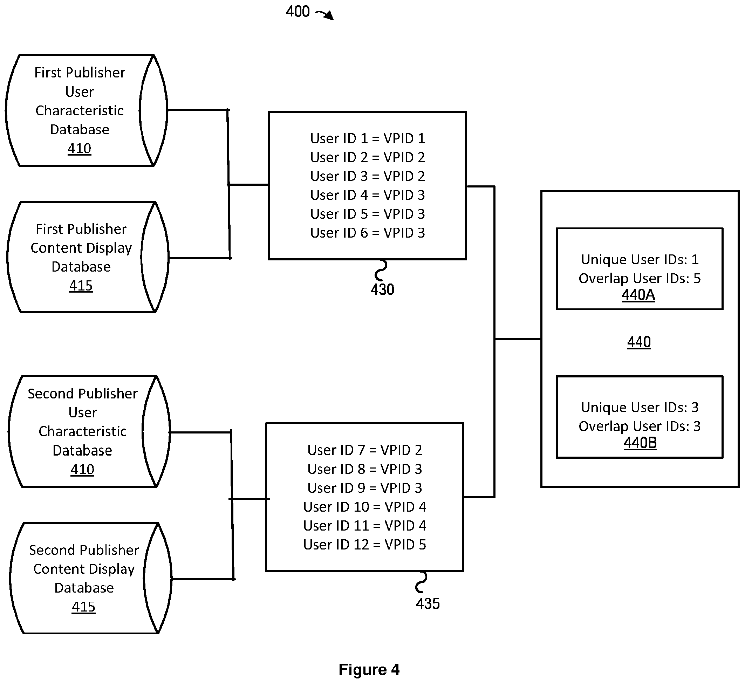

In further implementations, the system 100 additionally or alternatively uses further identifying characteristics such as a demographic of network users in the geographic region, timestamps of events in the geographic region, common network traffic in the geographic region, and/or information from one or more sensors, such as a smart device. In implementations in which the system 100 uses cookies to identify overlap user identifiers, the system 100 may use a subset of the cookies as described with more detail in Fig. 4 below.

At block 208, the system 100 generates, using the overlap metric, a respective frequency capping value for each of the plurality of publishers. In some implementations, the system 100 generates the respective frequency capping value using a number of variables defined by information gathered at blocks 202, 204, and 206. In some such implementations, the system 100 defines at least the following variables: *UniqueUserIDs, OverlapUserIDs, TotalUserIDs, OverlapImpressions,* and *EligibleImpressions.* The $TotalUserIDs_{px}$ represents the total number of unique virtual user identifiers from a given publisher x. $UniqueUserIDs_{px}$ represents the total number of unique virtual user identifiers from the publisher *x,* and the $OverlapUserIDs_{px}$ represents the total number of unique virtual user identifiers that overlap between the publisher x and another publisher. In some implementations, there may only be two publishers 1 and 2 for the algorithm to analyze, and thus $OverlapUserIDs_{p1} = OverlapUserIDs_{p2}$. In further implementations, there may be a greater number of publishers for the algorithm to analyze, and, as such, $OverlapUserIDs_{p1} \neq OverlapUserIDs_{p2}$. $OverlapImpressions_{px}$ refers to the number of content presentations (i.e., impressions) the system 100 shows to $OverlapUserIDs_{px}$.

Depending on the implementation, $EligibleImpressions_{px}$ refers to the total number of impressions that a publisher *x* is eligible for and may be calculated using the above-noted variables and a predetermined initial capping value. In some such implementations, the system 100 calculates the $EligibleImpressions_{px}$ for a publisher *x* according to the equation $EligibleImpressions_{px}$ = F * $UniqueUserIDs_{px}$ + F *

$$OverlapUserIDs_{px} * \left( \frac{OverlapImpressions_{px}}{\sum_i OverlapImpressions_{pi}} \right)$$

. For example, in implementations in which the publishing platforms 300 include two publisher platforms 310 and 320 for publishers 1 and 2, respectively, $EligibleImpressions_{p1}$ = F *

$$OverlapUserIDs_{p1} * \left( \frac{OverlapImpressions_{p1}}{OverlapImpressions_{p1} + OverlapImpressions_{p2}} \right)$$

$UniqueUserIDs_{p1}$ + F * and *Eligible-*

$$\left( \frac{OverlapImpressions_{p2}}{OverlapImpressions_{p1} + OverlapImpressions_{p2}} \right)$$

$Impressions_{p2}$ = F * $UniqueUserIDs_{p2}$ + F * $OverlapUserIDs_{p2}$ * .

Further, the system 100 may calculate the adjusted frequency capping value for each publisher *x* according to the equation $F_{px} = F * M_{px}$, where $F_{px}$ is the adjusted frequency capping value for each respective publisher *x*, F is a predetermined initial frequency capping value on a particular media content element being presented, and $M_{px}$ is a particular multiplier for the publisher x based on the variables described above. In some implementations,

$$F_{px} = \frac{EligibleImpressions_{px}}{TotalUserIDs_{px}} = \frac{F*UniqueUserIDs_{px} + F*OverlapUserIDs_{px}*\left( \frac{OverlapImpressions_{px}}{\sum_i OverlapImpressions_{pi}} \right)}{TotalUserIDs_{px}}$$

. As such,

$$M_{px} = \frac{UniqueUserIDs_{px} + OverlapUserIDs_{px}*\left( \frac{OverlapImpressions_{px}}{\sum_i OverlapImpressions_{pi}} \right)}{TotalUserIDs_{px}}$$

.

At block 210, the system 100 causes each of the publishers to limit a number of times a content element is provided to the multiplicity of users in accordance with the respective frequency capping value. In some implementations, the system 100 initially transmits the predetermined initial capping value before subsequently transmitting a message including a command to modify the predetermined initial capping value by the calculated multiplier to each of the publisher platforms 310 and 320. In other implementations the system 100 transmits a message including a command to replace the predetermined initial capping value with the adjusted frequency capping value. In still other implementations, the system 100 does not initially transmit the predetermined initial capping value, but instead uses the predetermined initial capping value only in calculating the adjusted frequency capping value before transmitting the adjusted frequency capping value to the publishers.

Depending on the implementation, the predetermined initial capping value and/or the adjusted frequency capping value may include a time frame aspect. For example, the predetermined initial capping value may command a publisher to present a media content element no more than 10 times, or the value may command a publisher to present a media content element no more than 10 times per week. In implementations in which the predetermined initial capping value and the adjusted frequency capping value include a time frame aspect, the system 100 may perform the method 200 for the publisher platforms 300 at least once per time frame completion (e.g.., once per week, etc.).

Fig. 4 illustrates a block diagram of an example model 400 using VPIDs to determine the number of unique and overlap user identities. Depending on the implementation, the model 400 may be implemented in the system and devices of Fig. 1.

In an example implementation of model 400, the system 100 may query the publishers the system analyzes to obtain information and/or identifiers related to the users using a publisher platform, such as platforms 310 and/or 320 of Fig. 3. In some implementations, the publisher in turn queries one or more databases with relevant information. In further implementations, the system 100 directly queries the publisher databases and/or servers. For the sake of clarity, Fig. 4 is illustrated depicting four databases queried by the system 100. However, other implementations of the techniques described herein are described by Fig. 4. For example, each publisher may have a single database rather than multiple databases.

In an example implementation of model 400, the system 100 queries each of databases 410, 415, 420, and 425. In some implementations, database 410 is a user characteristic database 410 for a first publisher, database 415 is a content display database 415 for the first publisher. In further implementations, databases 420 and 425 are a user characteristic database 420 and a content display database 425, respectively, for the second publisher.

In some implementations, the system 100 provides at least the server or database IP address, a process ID, and a 16-digit Unix time code timestamp when querying each database 410, 415, 420, and/or 425. The databases 410-425 then provide the requested traits to the system 100. In some implementations, the system 100 receives the information from the publishers at respective virtual identifier module 135 and/or databases 430 and 435. In further implementations, the databases 430 and 435 of system 100 then sort the information into a list at each database and/or for each publisher by virtual user identifier, using techniques described above with regard to Fig. 2.

The system 100 then determines, at frequency capping module 140 and/or a database 440, the number of unique and overlap virtual user identifiers by comparing the lists of user events sorted by VPID and, depending on the implementation, by sorting out a list of unique virtual user identifiers and overlap virtual user identifiers for each publisher, 440A and 440B.

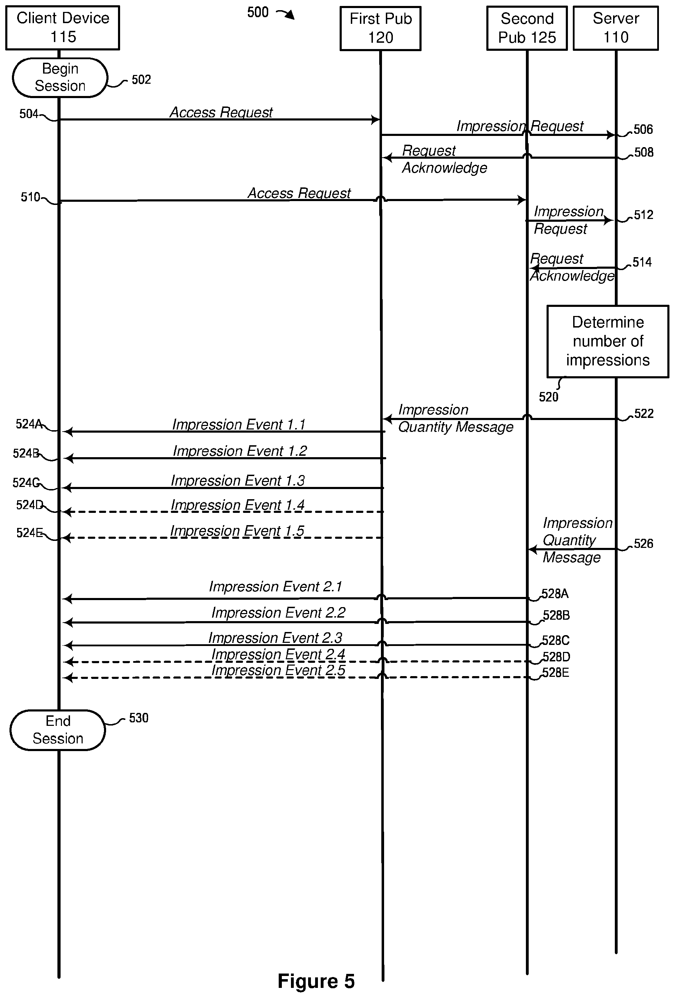

Fig. 5 illustrates an example messaging diagram 500 depicting relevant network traffic for a system 100 implementing the techniques described herein and a system implementing techniques known in the art. Message events depicted using a dashed line are unnecessary message events that only exist in a system implementing techniques known in the art, while message events depicted using a solid line take place for a system 100 implementing the techniques discussed herein and a system implementing techniques known in the art. The message diagram 500 depicts an example of network traffic while implementing techniques, not the methodology of the techniques described herein-an example of which may be seen in method 200 of Fig. 2.

At step 502, a client device 115 begins a network browsing session connected to a communication network through any known techniques, such as via 3G, 4G, 5G, Wi-Fi, Bluetooth, etc. During the browsing session, the client device transmits 502 and 510 access requests to at least the first publisher 120 and the second publisher 125, respectively. Depending on the implementation, the client device 115 may transmit 502 and 510 the access requests to access a webpage or application of each of the first publisher 120 and second publisher 125. In further implementations, rather than access requests, the client device 115 may transmit a request to download data at servers for each of first publisher 120 and second publisher 125. After receiving 504 the access request, the first publisher 120 transmits 506 an impression request to the data processing server 110. The impression request is a request from the first publisher for content and/or for a number of impressions of content to display to a user at the client device 115.

After receiving 506 the impression request, the data processing server 110 transmits 508 an acknowledgement of the request to the first publisher 120. In some implementations, the data processing server 110 transmits the content element and/or a cap for impressions to the first publisher 120 in addition to or in place of the acknowledgement. Similarly, after receiving 510 the access request from the client device 115, the second publisher 125 transmits 512 an impression request. Subsequently, the second publisher 125 receives 514 a request acknowledgement from the data processing server. In some implementations, the data processing server 110 transmits the content element and/or a cap for impressions to the second publisher 125 in addition to or in place of the acknowledgement.

Further, the timing of events 504 and 510 are flexible when compared to each other and to event pairs 506/508 and 512/514. As such, events 504, 506, and 508 may precede events 510, 512, and 514. Alternatively, events 510, 512, and 514 may precede events 504, 506, and 508. In other implementations, client device 115 may transmit both access requests 504 and 510 before events 506/508 and 512/514 occur.

At event 520, the data processing server 110 determines the number of impressions each of the first publisher 120 and the second publisher 125 should transmit to the client device 115. In some implementations, the data processing server 110 makes the determination using the techniques as described herein, such as the method 200 illustrated in Fig. 2 and described above.

Although Fig. 5 depicts event 520 as occurring after events 502-514, the timing of event 520 is flexible and event 520 may be implemented earlier in the process. For example, the data processing server 110 may determine the number of impressions at event 520 before the client device 115 begins the session 502. In such implementations, the data processing server 110 may transmit content elements for impressions and/or a cap value for impression presentations to

8

the first publisher 120 and/or second publisher along with transmitting 508 and 514 the request acknowledgements. In some such implementations, the data processing server 110 determines the number of impressions at event 520 prior to events 502-514 and updates the impression cap values after events 502-514 instead.

The data processing server 110 then transmits 522 an impression quantity message to the first publisher 120 and transmits 526 an impression quantity message to the second publisher 125. In some implementations, the impression quantity messages include a frequency capping value for the respective publisher telling each of publisher 120 and 125 the number of times to display a media content element to a user of a client device 115. In further implementations, the impression quantity messages include the media content element for the publisher to display. In some implementations, the impression quantity message transmitted 522 to the first publisher 120 and the impression quantity message transmitted 526 to the second publisher 125 are identical in format and/or in content.

After receiving 522 the impression quantity message, the first publisher 120 transmits 524A a first impression event 1.1 to the client device 115, causing the client device 115 to display the media content element a first time. The first publisher 120 repeats the transmission of the impression event until reaching the cap set by the data processing server 110 in the impression quantity message received 522 by the first publisher 120. In the example messaging diagram 500 of Fig. 5, the data processing server 110 has a predetermined initial capping value of 5, meaning that the data processing server attempts to cause the client device 115 to display 5 copies of a media content element to the user. Using traditional techniques known in the art, the data processing server 110 is unaware that the client device 115 accessing both the first publisher 120 and the second publisher 125 is the same client device 115. As such, using traditional techniques, the first publisher 120 transmits 524A, 524B, 524C, 524D, and 524E each of a first copy, second copy, third copy, fourth copy, and fifth copy of the impression event, respectively (Impression Event 1.1, 1.2, 1.3, 1.4, and 1.5) to the client device 115. Further, the second publisher transmits 528A, 528B, 528C, 528D, and 528E each of a sixth copy, seventh copy, eighth copy, ninth copy, and tenth copy of the impression event, respectively (Impression Event 2.1, 2.2, 2.3, 2.4, and 2.5) to the client device 115. Therefore, the data processing server 110 instructs each of the first publisher 120 and the second publisher 125 to cause the client device 115 to display the media content element 5 times, leading to a total of 10 impressions on the user-twice as many impressions as desired and twice as much network traffic as necessary.

Using the present techniques discussed herein, however, the data processing server determines that the first publisher 120 should cause the client device 115 to display 3 impressions and the second publisher 125 should cause the client device 115 to display 3 impressions. As such, the first publisher transmits 524A-C and the second publisher transmits 528A-C three copies each of the impression event (Impression Events 1.1-1.3 and 2.1-2.3) to the client device 115 before the client device 115 ends the session at event 530. Therefore, the client device displays the media content element 6 times, decreasing the number of impressions displayed and the amount of network traffic.

Though Fig. 5 depicts the transmission 522 of the message to the first publisher 120 before the transmission 526 of the message to the second publisher, in some implementations the order is reversed. Further, though Fig. 5 depicts events 524A-E occurring directly after event 522 and events 528A-E occurring directly after event 526, this is for the sake of clarity. Events 524A-E and 528A-E may occur in any order and/or substantially simultaneously. Similarly, though events 522 and 524A-E occur after events 504-508, they may occur before events 510-514. The above is also true for events 526 and 528A-E with regard to events 504-508.

While Fig. 5 illustrates a reduction in network traffic of four messages, these numbers are only exemplary, and in general the scenario of Fig. 5 can involve any suitable number of messages. For example, the predetermined initial capping value may be dozens or hundreds of impressions of a media content element, depending on the implementation, leading to greater reductions in network traffic. Further, the reduction in network traffic is in aggregate across all devices accessing the publishers. As such, the techniques described herein improve the network traffic of a system 100, improve the accuracy of distribution of media content elements by ensuring that the proper recipient receives the correct number of impression events, improve the distribution spread of impression events by allowing additional impression events to be transmitted to a wider array of users, and improve the privacy of a user by avoiding direct connections of user accounts and personal data, as is described above with reference to Fig. 2.

The following additional considerations apply to the foregoing discussion.

In some implementations, "message" is used and can be replaced by "information element (IE)". In some implementations, "IE" is used and can be replaced by "field". In some implementations, "configuration" can be replaced by "configurations" or the configuration parameters.

A user device in which the techniques of this disclosure can be implemented can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the user device in some cases may be embedded in an electronic system such as the head unit of a vehicle or an advanced driver assistance system (ADAS). Still further, the user device can operate as an internet-of-things (IoT) device or a mobile-internet device (MID). Depending on the type, the user device can include one or more general-purpose processors, a computer-readable memory, a user interface, one or more network interfaces, one or more sensors, etc.

Certain embodiments are described in this disclosure as including logic or a number of components or modules. Modules may be software modules (*e.g.,* code, or machine-readable instructions stored on non-transitory machine-readable medium) or hardware modules. A hardware module is a tangible unit capable of performing certain operations and may be configured or arranged in a certain manner. A hardware module can include dedicated circuitry or logic that is permanently configured (*e.g.,* as a special-purpose processor, such as a field programmable gate array (FPGA) or an application-specific integrated circuit (ASIC), a digital signal processor (DSP)) to perform certain operations. A hardware module may also include programmable logic or circuitry (*e.g.,* as encompassed within a general-purpose processor or other programmable processor) that is temporarily configured by software to perform certain operations. The decision to implement a hardware module in dedicated and permanently configured circuitry, or in temporarily configured circuitry (*e.g.*, configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

The invention is defined by the appended claims.

**Claims**

1. A method for improving accuracy of distributing content from a plurality of publishers (120, 125) to a multiplicity of users while maintaining user privacy, wherein at least some of the multiplicity of users have accessed content from the plurality of publishers using different respective user identifiers; the method comprising:

   generating (202), by one or more processors, a statistical model (400) of presentations of content from the plurality of publishers to the multiplicity of users;
   determining (204), using the statistical model for each of the multiplicity of users, one or more user identifiers corresponding to the user, to define a virtual user identifier (315, 325), wherein each of the user identifiers is associated with a different one of the plurality of publishers and defining the virtual user identifier includes assigning cookies associated with a respective geographic region to the virtual user identifier;
   determining (206), using the statistical model and the virtual user identifiers, how many of the multiplicity of users are associated with multiple ones of the plurality of publishers, to generate an overlap metric;
   generating (208), using the overlap metric, a respective frequency capping value for each of the plurality of publishers; and
   causing (210) each of the plurality of publishers to limit a number of times a content element is provided to the multiplicity of users in accordance with the respective frequency capping value.

2. The method of claim 1, further comprising:

   compiling a set of cookies, each cookie of the set of cookies associated with a user identifier of the one or more user identifiers; and
   assigning each cookie of the set of cookies to a virtual user identifier of the virtual user identifiers based on at least the geographic region associated with the respective cookie.

3. The method of claim 2, wherein compiling the set of cookies includes sampling a subset of cookies based on the cookies associated with the geographic region.

4. The method of claims 2 or 3, wherein each virtual user identifier is further constructed based on at least one of: a demographic of network users in the geographic region, timestamps of events in the geographic region, and information from one or more sensors.

5. The method of any of the preceding claims, wherein the respective frequency capping value for each of the plurality of publishers (120, 125) is further generated based on a corresponding multiplier for each publisher and a predetermined initial frequency capping value.

6. The method of any of the preceding claims, wherein the respective frequency capping value for each of the plurality of publishers (120, 125) is further generated based on how many of the multiplicity of users are associated with a single publisher of the plurality of publishers.

7. The method of any of the preceding claims, wherein the respective frequency capping value for each of the plurality of publishers (120, 125) is calculated using the equation:

$$F_{px} = F * \frac{UniqueUserIDs_{px} + OverlapUserIDs_{px} * \left( \frac{OverlapImpressions_{px}}{\Sigma_i \, OverlapImpressions_{pi}} \right)}{TotalUserIDs_{px}}$$

, and further wherein:

$F_{px}$ is the respective frequency capping value for publisher $x$ of the plurality of publishers;
$F$ is a predetermined initial frequency capping value;
$OverlapUserIDs_{px}$ is the overlap metric, the overlap metric how many of the multiplicity of users are associated with multiple ones of the plurality of publishers including the publisher $x$;
$OverlapImpressions_{px}$ is a number of presentations shown to $OverlapUserIDs_{px}$ for the publisher $x$;
$TotalUserIDs_{px}$ is a total number of user identifiers associated with the publisher $x$; and
$\Sigma_i \, OverlapImpressions_{pi}$ is a sum of $OverlapImpressions$ for each publisher $i$ of the plurality of publishers, including at least publisher $x$.

8. The method of any of the preceding claims, further comprising:

receiving a predetermined initial frequency capping value; and
modifying the predetermined initial frequency capping value for each publisher of the plurality of publishers (120, 125) based on the respective frequency capping value for the respective publisher of the plurality of publishers.

9. The method of any of the preceding claims, wherein the plurality of publishers (120, 125) consists of two publishers and wherein determining how many of the multiplicity of users are associated with multiple ones of the plurality of publishers is determining how many of the multiplicity of users are associated with both of the plurality of publishers.

10. The method of any of the preceding claims, wherein each virtual user identifier (315, 325) of the virtual user identifiers is an internet protocol, IP, address.

11. A system comprising processing hardware and configured to implement a method according to any of the preceding claims.

12. A computer-readable medium storing instructions that, when executed by one or more processors, cause the one or more processors to perform the method of any of claims 1 to 9.

**Patentansprüche**

1. Verfahren zum Verbessern der Genauigkeit des Verteilens von Inhalt von einer Vielzahl von Herausgebern (120, 125) an eine Vielfalt von Benutzern unter Beibehaltung der Benutzervertraulichkeit, wobei zumindest einige der Vielfalt von Benutzern auf Inhalt von der Vielzahl von Herausgebern unter Verwendung unterschiedlicher jeweiliger Benutzerkennungen zugegriffen haben; wobei das Verfahren Folgendes umfasst:

Erzeugen (202), durch einen oder mehrere Prozessoren, eines statistischen Modells (400) von Präsentationen von Inhalt aus der Vielzahl von Herausgebern an die Vielfalt von Benutzern;
Bestimmen (204), unter Verwendung des statistischen Modells, für jeden der Vielfalt von Benutzern, einer oder mehrerer Benutzerkennungen, die dem Benutzer entsprechen, um eine virtuelle Benutzerkennung (315, 325) zu definieren, wobei jede der Benutzerkennungen einem unterschiedlichen der Vielzahl von Herausgebern zugeordnet ist, und wobei das Definieren der virtuellen Benutzerkennung Zuweisen von Cookies, die einer jeweiligen geographischen Region zugeordnet sind, zu der virtuellen Benutzerkennung beinhaltet;
Bestimmen (206), unter Verwendung des statistischen Modells und der virtuellen Benutzerkennungen, wie viele der Vielfalt von Benutzern mehreren der Vielzahl von Herausgebern zugeordnet sind, um eine Überlappungsmetrik zu erzeugen;
Erzeugen (208), unter Verwendung der Überlappungsmetrik, eines jeweiligen Häufigkeitsobergrenzenwerts für jeden der Vielzahl von Herausgebern; und
Veranlassen (210), dass jeder der Vielzahl von Herausgebern eine Anzahl von Malen begrenzt, mit der ein Inhaltselement gemäß dem jeweiligen Häufigkeitsobergrenzenwert der Vielfalt von Benutzern bereitgestellt wird.

**2.** Verfahren nach Anspruch 1, weiter umfassend:

Kompilieren eines Satzes von Cookies, wobei jedes Cookie des Satzes von Cookies einer Benutzerkennung der einen oder mehreren Benutzerkennungen zugeordnet ist; und
Zuweisen jedes Cookies des Satzes von Cookies zu einer virtuellen Benutzerkennung der virtuellen Benutzerkennungen basierend auf mindestens der dem jeweiligen Cookie zugeordneten geographischen Region.

**3.** Verfahren nach Anspruch 2, wobei das Kompilieren des Satzes von Cookies das Abtasten einer Teilmenge von Cookies basierend auf den Cookies beinhaltet, die der geografischen Region zugeordnet sind.

**4.** Verfahren nach Anspruch 2 oder 3, wobei jede virtuelle Benutzerkennung weiter aufgebaut ist basierend auf mindestens einem: einer Demographie von Netzwerkbenutzern in der geografischen Region, Zeitstempeln von Ereignissen in der geografischen Region und Informationen von einem oder mehreren Sensoren.

**5.** Verfahren nach einem der vorstehenden Ansprüche, wobei der jeweilige Häufigkeitsobergrenzenwert für jeden der Vielzahl von Herausgebern (120, 125) weiter basierend auf einem entsprechenden Multiplizierer für jeden Herausgeber und einem vorbestimmten anfänglichen Häufigkeitsobergrenzenwert erzeugt wird.

**6.** Verfahren nach einem der vorstehenden Ansprüche, wobei der jeweilige Häufigkeitsobergrenzenwert für jeden der Vielzahl von Herausgebern (120, 125) weiter basierend darauf erzeugt wird, wie viele der Vielfalt von Benutzern einem einzigen Herausgeber der Vielzahl von Herausgebern zugeordnet sind.

**7.** Verfahren nach einem der vorstehenden Ansprüche, wobei der jeweilige Häufigkeitsobergrenzenwert für jeden der Vielzahl von Herausgebern (120, 125) unter Verwendung der Gleichung berechnet wird:

$$F_{px} = F * \frac{UniqueUserIDs_{px} + OverlapUserIDs_{px} * \left( \frac{OverlapImpressions_{px}}{\sum_i OverlapImpressions_{pi}} \right)}{TotalUserIDS_{px}},$$

wobei weiter:

$F_{px}$ der jeweilige Häufigkeitsobergrenzenwert für den Herausgeber x der Vielzahl von Herausgebern ist;
$F$ ein vorbestimmter anfänglicher Häufigkeitsobergrenzenwert ist;
$OverlapUserIDs_{px}$ die Überlappungsmetrik ist, die Überlappungsmetrik, wie viele der Vielfalt von Benutzern mehreren der Vielzahl von Herausgebern einschließlich des Herausgebers x zugeordnet sind;
$OverlapImpressions_{px}$ eine Anzahl von Präsentationen ist, die $OverlapUserIDs_{px}$ für den Herausgeber x gezeigt sind;
$TotalUserIDs_{px}$ eine Gesamtanzahl von Benutzerkennungen ist, die dem Herausgeber x zugeordnet ist; und
$\Sigma_i OverlapImpressions_{pi}$ eine Summe von $OverlapImpressions$ für jeden Herausgeber $i$ der Vielzahl von Herausgebern, einschließlich mindestens des Herausgebers x ist.

**8.** Verfahren nach einem der vorstehenden Ansprüche, das weiter Folgendes umfasst:

Empfangen eines vorbestimmten anfänglichen Häufigkeitsobergrenzenwerts; und
Modifizieren des vorbestimmten anfänglichen Häufigkeitsobergrenzenwerts für jeden Herausgeber der Vielzahl von Herausgebern (120, 125) basierend auf dem jeweiligen Häufigkeitsobergrenzenwert für den jeweiligen Herausgeber der Vielzahl von Herausgebern.

**9.** Verfahren nach einem der vorstehenden Ansprüche, wobei die Vielzahl von Herausgebern (120, 125) aus zwei Herausgebern besteht und wobei Bestimmen, wie viele der Vielfalt von Benutzern mehreren der Vielzahl von Herausgebern zugeordnet sind, Bestimmen ist, wie viele der Vielfalt von Benutzern beiden der Vielzahl von Herausgebern zugeordnet sind.

**10.** Verfahren nach einem der vorstehenden Ansprüche, wobei jede virtuelle Benutzerkennung (315, 325) der virtuellen Benutzerkennungen eine Internetprotokoll-Adresse, IP-Adresse, ist.

**11.** System, das Verarbeitungshardware umfasst und dazu konfiguriert ist, ein Verfahren nach einem der vorstehenden Ansprüche umzusetzen.

**12.** Computerlesbares Medium, auf dem Anweisungen gespeichert sind, die, wenn sie von einem oder mehreren Prozessoren ausgeführt werden, den einen oder die mehreren Prozessoren veranlassen, das Verfahren nach einem der Ansprüche 1 bis 9 durchzuführen.

**Revendications**

**1.** Procédé permettant d'améliorer la précision de la distribution de contenu provenant d'une pluralité d'éditeurs (120, 125) à une multitude d'utilisateurs tout en préservant la confidentialité des utilisateurs, dans lequel au moins certains utilisateurs parmi la multitude d'utilisateurs ont accédé au contenu provenant de la pluralité d'éditeurs à l'aide de différents identifiants d'utilisateur respectifs ; le procédé comprenant :

la génération (202), par un ou plusieurs processeurs, d'un modèle statistique (400) de présentations de contenu provenant de la pluralité d'éditeurs à la multiplicité d'utilisateurs ;
la détermination (204), à l'aide du modèle statistique pour chacun de la multiplicité d'utilisateurs, d'un ou plusieurs identifiants d'utilisateur correspondant à l'utilisateur, pour définir un identifiant d'utilisateur virtuel (315, 325), dans lequel chacun des identifiants d'utilisateur est associé à un éditeur différent de la pluralité d'éditeurs et la définition de l'identifiant d'utilisateur virtuel comporte l'attribution de mouchards électroniques associés à une région géographique respective à l'identifiant d'utilisateur virtuel ;
la détermination (206), à l'aide du modèle statistique et des identifiants d'utilisateur virtuel, du nombre d'utilisateurs parmi la multiplicité d'utilisateurs associé à plusieurs éditeurs parmi la pluralité d'éditeurs, pour générer un indicateur de chevauchement ;
la génération (208), à l'aide de l'indicateur de chevauchement, d'une valeur de plafonnement de fréquence respective pour chacun de la pluralité d'éditeurs ; et
le fait d'amener (210) chacun de la pluralité d'éditeurs à limiter un nombre de fois qu'un élément de contenu est fourni à la multiplicité d'utilisateurs conformément à la valeur de plafonnement de fréquence respective.

**2.** Procédé selon la revendication 1, comprenant également :

la compilation d'un ensemble de mouchards électroniques, chaque mouchard électronique de l'ensemble de mouchards électroniques étant associé à un identifiant d'utilisateur parmi les un ou plusieurs identifiants d'utilisateur ; et
l'attribution à chaque mouchard électronique de l'ensemble de mouchards électroniques d'un identifiant d'utilisateur virtuel parmi les identifiants d'utilisateur virtuel sur la base d'au moins la région géographique associée au mouchard électronique respectif.

**3.** Procédé selon la revendication 2, dans lequel la compilation de l'ensemble de mouchards électroniques comporte l'échantillonnage d'un sous-ensemble de mouchards électroniques sur la base des mouchards électroniques associés à la région géographique.

**4.** Procédé selon les revendications 2 ou 3, dans lequel chaque identifiant d'utilisateur virtuel est également construit sur la base d'au moins l'un des éléments suivants : une démographie d'utilisateurs de réseau dans la région géographique, des horodatages d'événements dans la région géographique et des informations provenant d'un ou plusieurs capteurs.

**5.** Procédé selon l'une quelconque des revendications précédentes, dans lequel la valeur de plafonnement de fréquence respective pour chacun de la pluralité d'éditeurs (120, 125) est également générée sur la base d'un multiplicateur correspondant pour chaque éditeur et d'une valeur de plafonnement de fréquence initiale prédéterminée.

**6.** Procédé selon l'une quelconque des revendications précédentes, dans lequel la valeur de plafonnement de fréquence respective pour chacun de la pluralité d'éditeurs (120, 125) est également générée sur la base du nombre d'utilisateurs parmi la multitude d'utilisateurs associé à un seul éditeur parmi la pluralité d'éditeurs.

**7.** Procédé selon l'une quelconque des revendications précédentes, dans lequel la valeur de plafonnement de fréquence respective pour chacun de la pluralité d'éditeurs (120, 125) est calculée à l'aide de l'équation :

$$F_{px} = F *$$

$$\frac{ID\ d'utilisateur\ uniques_{px} + ID\ d'utilisateur\ de\ chevauchement_{px} * \left( \frac{Impressions\ de\ chevauchement_{px}}{\Sigma_i Impressions\ de\ chevauchement_{pi}} \right)}{Nombre\ total\ d'ID\ d'utilisateur_{px}},$$

et également dans lequel :

$F_{px}$ est la valeur de plafonnement de fréquence respective pour l'éditeur x de la pluralité d'éditeurs ;

$F$ est une valeur de plafonnement de fréquence initiale prédéterminée ;

*ID d'utilisateur de chevauchement*$_{px}$ est l'indicateur de chevauchement, l'indicateur de chevauchement représente le nombre parmi la multiplicité d'utilisateurs associé à plusieurs éditeurs parmi la pluralité d'éditeurs, y compris l'éditeur x ;

*Impressions de chevauchement*$_{px}$ est un nombre de présentations montrées à *ID d'utilisateur de chevauchement*$_{px}$ pour l'éditeur x ;

*Nombre total d'ID d'utilisateur*$_{px}$ est un nombre total d'identifiants d'utilisateur associés à l'éditeur x ; et

$\Sigma_i$ *Impressions de chevauchement*$_{pi}$ est une somme *d'Impressions de chevauchement* pour chaque éditeur *i* parmi la pluralité d'éditeurs, y compris au moins l'éditeur *x*.

8. Procédé selon l'une quelconque des revendications précédentes, comprenant également :

la réception d'une valeur de plafonnement de fréquence initiale prédéterminée ; et
la modification de la valeur de plafonnement de fréquence initiale prédéterminée pour chaque éditeur parmi la pluralité d'éditeurs (120, 125) sur la base de la valeur de plafonnement de fréquence respective pour l'éditeur respectif parmi la pluralité d'éditeurs.

9. Procédé selon l'une quelconque des revendications précédentes, dans lequel la pluralité d'éditeurs (120, 125) est constituée de deux éditeurs et dans lequel la détermination du nombre d'utilisateurs parmi la pluralité d'utilisateurs associé à plusieurs éditeurs parmi la pluralité d'éditeurs consiste à déterminer le nombre d'utilisateurs parmi la pluralité d'utilisateurs associé aux deux éditeurs parmi la pluralité d'éditeurs.

10. Procédé selon l'une quelconque des revendications précédentes, dans lequel chaque identifiant d'utilisateur virtuel (315, 325) des identifiants d'utilisateur virtuel est une adresse de protocole Internet, IP.

11. Système comprenant un matériel de traitement et configuré pour mettre en œuvre un procédé selon l'une quelconque des revendications précédentes.

12. Support lisible par ordinateur stockant des instructions qui, lorsqu'elles sont exécutées par un ou plusieurs processeurs, amènent les un ou plusieurs processeurs à effectuer le procédé selon l'une quelconque des revendications 1 à 9.

100 ↴

**Figure 1**

200

Generate a statistical model of presentations of content from a plurality of publishers to a multiplicity of users — 202

Determine, using the statistical model for each of the users, one or more user identifiers corresponding to the user, to define a virtual user identifier, wherein each of the user identifiers is associated with a different one of the plurality of publishers — 204

Determine, using the statistical model and the virtual user identifiers, how many of the multiplicity of users are associated with multiple ones of the plurality of publishers, to generate an overlap metric — 206

Generate, using the overlap metric, a respective frequency capping value for each of the plurality of publishers — 208

Cause each of the publishers to limit a number of times a content element is provided to the multiplicity of users in accordance with the respective frequency capping value — 210

**Figure 2**

**Figure 3**

400

First Publisher User Characteristic Database 410

First Publisher Content Display Database 415

Second Publisher User Characteristic Database 410

Second Publisher Content Display Database 415

User ID 1 = VPID 1
User ID 2 = VPID 2
User ID 3 = VPID 2
User ID 4 = VPID 3
User ID 5 = VPID 3
User ID 6 = VPID 3
430

User ID 7 = VPID 2
User ID 8 = VPID 3
User ID 9 = VPID 3
User ID 10 = VPID 4
User ID 11 = VPID 4
User ID 12 = VPID 5
435

Unique User IDs: 1
Overlap User IDs: 5
440A

440

Unique User IDs: 3
Overlap User IDs: 3
440B

**Figure 4**

**Figure 5**

**EP 4 260 269 B1**

**Patent documents cited in the description**

- US 2018060753 A1

- US 7359952 B2